# EUROPEAN PATENT SPECIFICATION

(11) **EP 1 968 084 B1**
(45) Date of publication and mention of the grant of the patent: **15.06.2011**
(21) Application number: 07024415.7
(22) Date of filing: 17.12.2007
(51) Int. Cl.: H01H 3/46

(54) **Apparatus for connecting link pin of circuit breaker**
Vorrichtung zum Anschluss des Verbindungsstiftes eines Schutzschalters
Appareil pour la connexion d'un axe de liaison de disjoncteur

(30) Priority: 29.12.2006 KR 20060033040 U
(43) Date of publication of application: 10.09.2008
(73) Proprietor: LS Industrial Systems Co., Ltd, Jung-Gu Seoul (KR)
(72) Inventor: Park, Woo-Jin, Cheongju Chungcheongbuk-do (KR)
(74) Representative: Lang, Johannes

(56) References cited:
- DE-U1- 29 605 081
- DE-U1- 29 608 061

## Description

### BACKGROUND OF THE INVENTION

### 1. Field of the Invention

The present invention relates to a circuit breaker, and more particularly, to an apparatus for connecting a link pin of a circuit breaker, which can reduce the number of components necessary for connecting an operating mechanism and a movable contactor operated by force transferred from an operation of the operating mechanism and electrically connected or disconnected from a fixed contactor, and which can facilitate a connecting process thereof.

### 2. Description of the Background Art

DE 296 08 061 U1 discloses an apparatus for connecting a link pin of a circuit breaker, comprising a link for connecting with an operating mechanism and inserted into a cage of a movable contactor; a link pin inserted into the cage to lock the link; and a pin supporting member having an elastic portion so as to be elastically deformed by itself and detachably coupled into the cage by the elastic portion so as to support the link pin.

In general, a circuit breaker is a device to protect an electric circuit of an electrical power distribution system and a device, when a fault current (or an abnormal current) occurs in the electric circuit, by breaking the fault current.

The circuit breaker includes a fixed contactor and a movable contactor. The circuit breaker is electrically connected or disconnected as the movable contactor contacts or is spaced from the fixed contactor by a rotational movement of the movable contactor. The movable contactor is connected to the operating mechanism and performs a rotational movement by a load transferred from the operation of the device unit, and the operating mechanism and the movable contactor are connected to each other by a connecting unit.

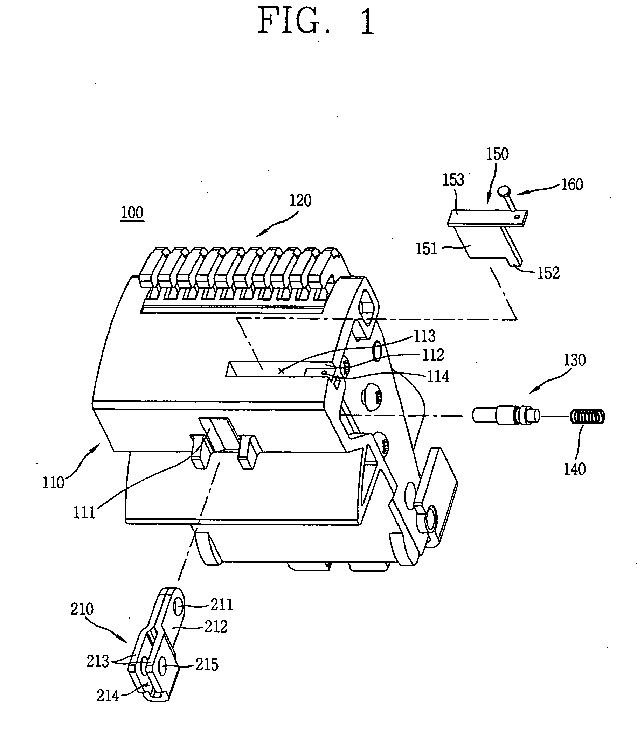

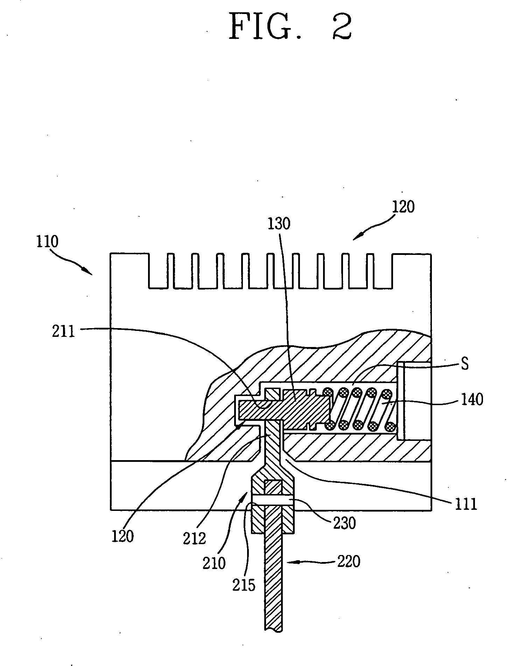

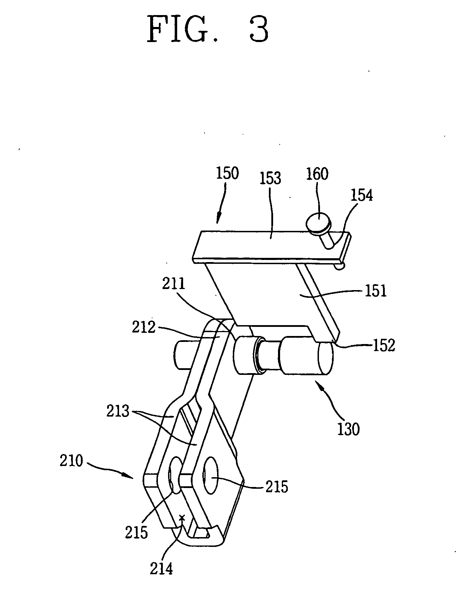

Figure 1 is an exploded perspective view illustrating a movable contactor of a circuit breaker. Figure 2 is a partial cross-sectional view illustrating a portion of the movable contactor, and Figure 3 is a perspective view illustrating a related art connecting apparatus for connecting a movable contactor and a device unit.

As shown in the drawings, the movable contactor 100 includes a cage 110 having a certain shape, and a mover 120 mounted at one side of the cage 110.

An insertion space S for receiving the connecting unit is provided at one side inside the cage 110. An insertion recess 111 communicating with the insertion space S is disposed in one surface of the cage 110, and a holder fixing portion is disposed on another surface of the cage 110. The holder fixing portion includes a mounting recess 112 disposed in one surface of the cage 110 to have a certain depth and a rectangular cross-sectional area, an opening 113 disposed in a lower surface of the mounting recess 112 so as to be communicated with the insertion space S, and a threaded hole 114 formed in a lower surface of the mounting recess 112.

A link 210 of the operating mechanism is inserted into the insertion recess 111 in the cage 110. The link 210 is formed to have a certain thickness and length, and includes a first connecting portion 212 at one end thereof having a first through hole 211 therein and second connecting portions 213 extending from the first connecting portion 212 with a certain length. A slit 214 is formed between the second connecting portions 213, and a second through hole 215 penetrating the slit 214 is formed in each side of the second connecting portions 213.

The link 210 is positioned such that the first connecting portion 212 is inserted into the insertion recess 111 of the cage 110 and the second connecting portion 213 is exposed outside of the cage 110. A connecting member 220 of the operating mechanism is inserted into the slit 214 in the second connecting portion 213 of the link 210, and a connecting pin 230 is inserted through the second through holes 215 in the second connecting portion 213, thus to connect the connecting member 220 and the link 210.

A link pin 130 of the connecting unit is inserted into the insertion space S of the cage 110, and a coil spring 140 is then inserted therein. A holder 150 for supporting the link pin 130 and the coil spring 140 is coupled to the cage 110.

One end of the link pin 130 is inserted through the first through hole 211 in the link 210 and thus the link pin 130 can fix the link 210.

The holder 150 includes a body portion 151 having a certain thickness and area, a supporting portion 152 extending from one side of the body portion 151 and having a rectangular shape of a certain width and length, a mounting portion 153 extending from the body portion 151 so as to have a certain area and thickness, and a through hole 154 penetratingly formed in one side of the mounting portion 153. The thickness and area of the mounting portion 153 are formed to correspond to the depth and area of the mounting recess 112 in the cage 110.

When the body portion 151 of the holder 150 is inserted into the opening 113 in the cage 110, the supporting portion 152 extending from the body portion 151 supports the link pin 130 and the coil spring 140. Here, the mounting portion 153 of the holder 150 is inserted into the mounting recess 112 of the cage 110, and the threaded hole 114 formed in the lower surface of the mounting recess 112 and the through hole 154 formed at the mounting portion 153 of the holder 150 are aligned with each other. Then, a holder coupling screw 160 is inserted into the thusly aligned through hole 154 and the screw hole 114. The holder coupling screw 160 is configured to couple the holder 150 and the cage 110, whereby the holder 150 is fixed to the cage 110.

However, the above-mentioned construction requires many components and makes the assembly process complicated, since the body portion 151 and the mounting portion 153 of the holder 150 are respectively inserted into the opening 113 and the mounting recess 112 in the cage 110, and the holder coupling screw 160 is coupled into the through hole 154 in the holder 150 and the screw recess 114 in the cage 110.

Accordingly, many components are required to fix the holder 150 to the cage 110 so as to support the link pin 130 inserted into the cage 110, and moreover, the assembly process thereof becomes complicated, thereby reducing assembly productivity and increasing the manufacturing cost.

### SUMMARY OF THE INVENTION

Therefore, it is an object of the present invention to provide an apparatus for connecting a link pin of a circuit breaker, which can reduce the number of components required for connecting an operating mechanism and a movable contactor operated by force transferred from an operation of the operating mechanism and electrically connected or disconnected from a fixed contactor, and which can facilitate a connecting process thereof.

To achieve this and other advantages and in accordance with the purpose of the present invention, as embodied and broadly described herein, there is provided an apparatus for a connecting link pin of a circuit breaker, comprising: a link of an operating mechanism and inserted into a cage of a movable contactor; a link pin inserted into the cage to lock the link; and a pin supporting member having an elastic portion to be elastically deformed by itself and detachably coupled to the cage by the elastic portion so as to support the link pin.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is an exploded perspective view illustrating the components of a circuit breaker having a related art connecting apparatus;
Figure 2 is a partial cross-sectional view illustrating a portion of the related art circuit breaker of Fig. 1;
Figure 3 is a perspective view illustrating the connecting apparatus of the related art circuit breaker of Fig. 1;
Figure 4 is a perspective view of a circuit breaker implementing an apparatus for connecting a link pin according to the present invention;
Figure 5 is an exploded perspective view illustrating the components of the apparatus for connecting a link pin according to the present invention; and
Figure 6 is a partial cross-sectional view illustrating a coupled state of the apparatus for connecting a link pin according to the present invention.

### DETAILED DESCRIPTION OF THE INVENTION

Description will now be given in detail of the apparatus for connecting a link pin of the circuit breaker of the present invention, examples of which are illustrated in the accompanying drawings.

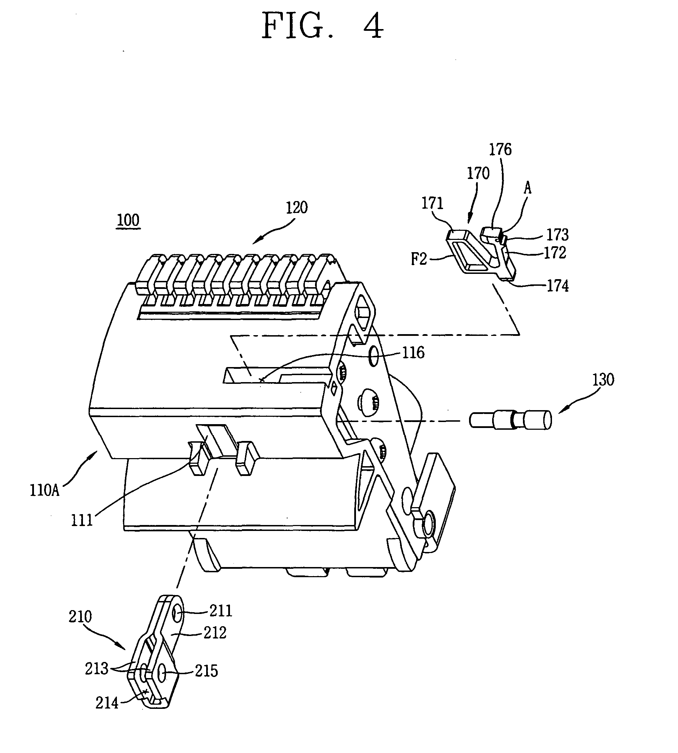

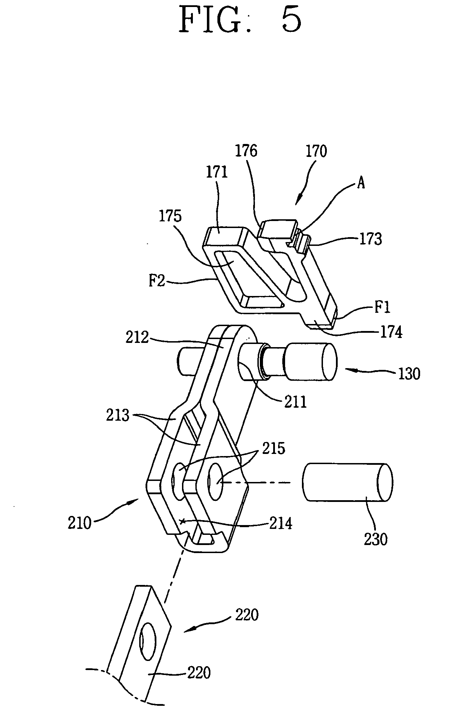

Figure 4 is an exploded perspective view illustrating a movable contactor of a circuit breaker implementing the apparatus for connecting the link pin of the circuit breaker of the present invention, and Figure 5 is an exploded perspective view illustrating an apparatus for connecting the link pin of the circuit breaker according to the present invention. Referring to the drawings, one embodiment of the apparatus for connecting the link pin of a circuit breaker in accordance with the present invention will be described.

First, the movable contactor 100 includes a cage 110A formed in a certain shape, and a mover 120 mounted at one side of the cage 110.

An insertion space S for receiving the connecting unit is provided at one side inside the cage 110A. An insertion recess 111 communicating with the insertion space S is disposed in one surface of the cage 110A, and a detachable fixing portion is disposed on another surface of the cage 110A. The detachable fixing portion includes a base recess 115 disposed in one surface of the cage 110A so as to have a certain depth and area, and an opening 116 penetratingly formed in a lower surface of the base recess 115 so as to be communicated with the insertion space S.

A link 210 of the operating mechanism is inserted into the insertion recess 111 of the cage 110. The link 210 is formed to have a certain thickness and length, and includes a first connecting portion 212 at one end thereof having a first through hole 211 therein and second connecting portions 213 extending from the first connecting portion 212 with a certain length. A slit 214 is formed between the second connecting portions 213, and second through holes 215 penetrating the slit 214 are formed in each of the second connecting portions 213.

The link 210 is positioned such that the first connecting portion 212 is inserted into the insertion recess 111 of the cage 110 and the second connecting portion 213 is exposed outside of the cage 110. A connecting member 220 of the operating mechanism is inserted into the slit 214 in the second connecting portion 213 of the link 210, and a connecting pin 230 is inserted through the second through holes 215 in the second connecting portion 213, thus to connect the connecting member 220 and the link 210.

A link pin 130 of the connecting unit is inserted into the insertion space S in the cage 110A, and a pin supporting member 170 supporting the link pin 130 is detachably coupled to a detachable fixing portion of the cage 110.

One side of the link pin 130 is inserted through the first through hole 211 in the link 210, and consequently the link pin 130 can secure the link 210.

The pin supporting member 170 includes a body portion 171, an elastic portion 172 extending from one side of the body portion 171 so as to have a certain length and spaced from the body portion 171 with a certain gap therebetween, a stopping portion 173 formed at one side of the elastic portion 172 so as to be stopped at one side of the cage 110A, a stopper 176 protruding from an end portion of the elastic portion toward the body portion so as to prevent an extreme deformation of the elastic portion 172, and a supporting portion 174 extending from the body portion 171 with a certain length so as to fix the link pin 130 when being coupled to the cage 110A. Preferably, a cross-section of the supporting portion 174 is formed to have a rectangular shape, and an inclined surface F1 is provided at an end of the supporting portion 174. Preferably, the body portion 171 is formed with a hollow weight reducing opening 175 for reducing the weight thereof.

The pin supporting member 170 is provided with a planar surface F2 formed on one side of the body portion 171 so as to be supported by an inner circumferential wall of the opening 116 when being coupled into the opening 116 in the cage 110, and the elastic portion 172 is formed to be inclined in relation to the planar surface F2 of the body portion 171.

The stopping portion 173 of the pin supporting member 170 is formed as a stopping protrusion extending from the end portion of the elastic portion so as to have a certain height. A stopping recess A is disposed above the stopping protrusion to have a certain width and depth.

A stopper recess 117 for catching the stopping portion 173 (i. e., stopping protrusion) is provided in an inner wall of the opening 116 in the cage into which the pin supporting member 170 is inserted. When the pin supporting member 170 is inserted into the opening 116 in the cage, the stopping protrusion formed at the end of the elastic portion 172 is inserted into the stopper recess 117, thereby fixing the pin supporting member 170. And, while the stopping protrusion is inserted into the stopper recess 117 and stopped therein, the stopper 176 and the stopping recess A are exposed outside of the opening 116 in the cage. For this reason, in case the pin supporting member 170 needs to be removed from the cage 110A, the stopping recess A is used as a leverage exerting point to take out the pin supporting member 170. Further, when the elastic portion 172 is deflected towards the body portion 171, the stopper 176 is stopped by abutting against the body portion 171 thus to limit the deformation of the elastic portion 172.

The operational effect of the apparatus for connecting the link pin of the circuit breaker of the present invention will now be described in detail.

The assembly process of the apparatus for connecting the link pin of the circuit breaker is as follows:

The first connecting portion 212 of the link 210 is inserted into the insertion recess 111 in the cage 110A of the movable contactor 100, and the second connecting portions 213 of the link 210 are exposed outside of the cage 110. And, as the link pin 130 is inserted into the insertion space S in the cage 110, the one end of the link pin 130 is inserted into the first through hole 211 in the link 210.

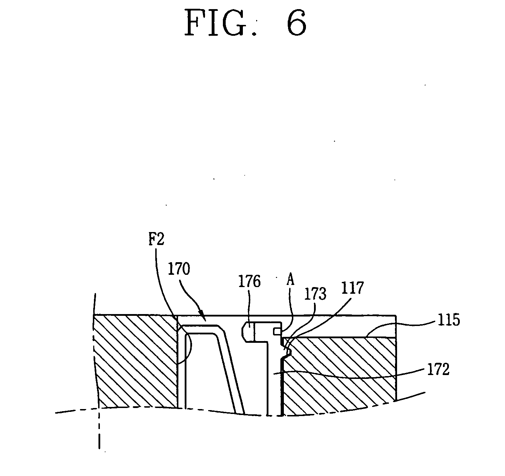

The body portion 171 and the elastic portion 172 of the pin supporting member 170 are inserted into the opening 116 in the cage 110A, and then the link pin 130 is supported by one surface of the supporting portion 174 extending from the body portion 171. With this, as shown in Fig. 6, the elastic portion 172 is elastically deformed while abutting and being supported by an inner wall of the opening 116 and thereby being deflected. The stopping portion 173 formed at the end of the elastic portion 172 is stopped and fixed by the stopper recess 117 formed in the inner wall of the opening 116.

The pin supporting member 170 is inserted into and coupled in the opening 116 in the cage 110A, while the elastic portion 172 is being elastically deformed by itself, thereby making the coupling firm. And, if the elastic portion 172 of the pin supporting member 170 is deflected to release the stopping portion 113 from the stopper recess 117, the pin supporting member 170 may be removed from the opening 116 in the cage 110A.

As abovementioned, according to the present invention, when the link pin 130 securing the link 210 of the operating mechanism is supported and fixed, the pin supporting member 170 supporting the link pin 130 is provided with the elastic portion 172 and is detachably coupled into the opening 116 in the cage 110A by the elasticity due to the elastic deformation of the elastic portion 172 itself, thereby supporting the link pin 130, and thus simplifying the connecting structure. That is, in the related art, the holder 150 supporting the link pin 130 is fixed to the cage 110 by the holder coupling screw 160, thereby requiring many components. However, in the present invention, the pin supporting member 170 supporting the link pin 130 is provided with the elastically deformable elastic portion 172, and by the elastic deformation of the elastic portion 172, the stopping portion 173 formed at the end of the elastic portion 172 is stopped at and fixed into one side of the cage 110. Accordingly, the link pin 130 can be fixed by using only the pin supporting member 170, thereby reducing the number of the components required.

Further, since only the pin supporting member 170 is inserted into the opening 116 in the cage 110A, the pin supporting member 170 is not only fixed to the cage 110, but also fixedly supports the link pin 130, thereby facilitating the component assembly process and assembly work.

As so far described, the apparatus for connecting the link pin of a circuit breaker according to the present invention can reduce the manufacturing cost of the product and increase assembly productivity, when the operating mechanism is connected to the movable contactor by force transferred from the operation of the device unit, since the number of components supporting the link pin for locking the link of the operating mechanism is reduced and the working process for assembling or disassembling the components is simplified.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art.

## Claims

1. An apparatus for connecting a link pin (130) of a circuit breaker, comprising:
a link (210) for connecting with an operating mechanism and inserted into a cage (110A) of a movable contactor (100);
a link pin (130) inserted into the cage (110A) to lock the link (210); and
a pin supporting member (170) having an elastic portion (172) so as to be elastically deformed by itself and detachably coupled into the cage (110A) by the elastic portion (172) so as to support the link pin (130);
whereby
the pin supporting member (170) comprises:
a body portion (171);
an elastic portion (172) extending from one side of the body portion (171) so as to have a certain length and spaced from the body portion (171) with a certain gap therebetween;
a stopping portion (173) formed at one side of the elastic portion (172), and
a supporting portion (174) extending from the body portion (171) with a certain length so as to fix the link pin (130) when being coupled to the cage (110A);
wherein an end of the supporting portion (174) has an inclined surface **characterised by** the stopping portion (173) being stopped at one side of the cage (110A) in a stopper recess (117).

2. The apparatus of claim 1, wherein the pin supporting member (170) is provided with a planar surface formed on one surface of the body portion (171) so as to be supported by an inner surface of the cage (110A) when being coupled to the cage (110A), and the elastic portion (172) is formed to be inclined with respect to the planar surface of the body portion (171).

3. The apparatus of claim 1, further comprising:
a stopper (176) protruding from an end portion of the elastic portion (172) with a certain length so as to abut against and thereby be stopped by the body portion (171) when the elastic portion (172) is deflected more than a certain distance.

4. The apparatus of claim 1, further comprising:
a stopping recess (A) disposed in a side surface of the end portion of the elastic portion (172) to facilitate removal of the pin supporting member (170).

## Patentansprüche

1. Vorrichtung zum Anschluss eines Verbindungsstifts (130) eines Schutzschalters umfassend:
eine Verbindung (210) zum Anschließen an einen Betriebsmechanismus und eingefügt in ein Gehäuse (110A) eines beweglichen Schalters (100);
einen Verbindungsstift (130), der in das Gehäuse (110A) eingefügt ist, um die Verbindung (210) zu sperren; und
ein Stift unterstützendes Bauteil (170) mit einem elastischen Abschnitt (172), um durch sich selbst elastisch deformiert zu werden, und lösbar an das Gehäuse (110A) gekoppelt durch den elastischen Abschnitt (172), um den Verbindungsstift (130) zu unterstützen;
wobei das Stift unterstützende Bauteil (170) umfasst:
einen Körperabschnitt (171);
einen elastischen Abschnitt (172), der sich von einer Seite des Körperabschnitts (171) erstreckt, um eine gewisse Länge aufzuweisen, und um von dem Körperabschnitt (171) mit einem gewissen Spalt dazwischen beabstandet zu sein;
einen Stoppabschnitt (173), der auf einer Seite des elastischen Abschnitts (172) gebildet ist; und
einen unterstützenden Abschnitt (174), der sich von dem Körperabschnitt (171) mit einer gewissen Länge erstreckt, um den Verbindungsstift (130) bei Kopplung an das Gehäuse (110A) zu fixieren;
wobei ein Ende des unterstützenden Abschnitts (174) eine geneigte Oberfläche aufweist,
**dadurch gekennzeichnet, dass** der Stoppabschnitt (173) auf einer Seite des Gehäuses (110A) in einer Stoppaussparung (117) stoppt.

2. Vorrichtung nach Anspruch 1, in welcher das Stift unterstützende Bauteil (170) mit einer ebenen Oberfläche versehen ist, die auf einer Oberfläche des Körperabschnitts (171) gebildet ist, um durch eine innere Oberfläche des Gehäuses (110A) bei Kopplung an das Gehäuse (110A) unterstützt zu werden, und in welcher der elastische Abschnitt (172) geformt ist, um in Bezug auf die ebene Oberfläche des Körperabschnitts (171) geneigt zu sein.

3. Vorrichtung nach Anspruch 1, weiterhin umfassend:
einen Stopper (176), der von einem Endabschnitt des elastischen Abschnitts (172) mit einer gewissen Länge hervorsteht, um gegen den Körperabschnitt (171) anzustoßen, und durch den Körperabschnitt (171) gestoppt zu werden, wenn der elastische Abschnitt (172) um mehr als eine bestimmte Entfernung abgelenkt wird.

4. Vorrichtung nach Anspruch 1, weiterhin umfassend:
eine Stoppaussparung (A), die in einer Seitenoberfläche des Endabschnitts des elastischen Abschnitts (172) angeordnet ist, um das Entfernen des Stift unterstützenden Bauteils (170) zu erleichtern.

## Revendications

1. Un dispositif pour connecter une broche de liaison (130) d'un coupe-circuit, comprenant :
une liaison (210) pour se connecter à un mécanisme d'actionnement et insérée dans une cage (110A) d'un contacteur mobile (100);
une broche de liaison (130) insérée dans la cage (110A) pour verrouiller la liaison (210); et
un organe support de broche (170) possédant une partie élastique (172) permettant d'être élastiquement déformée par elle-même et couplée de manière détachable dans la cage (110A) par la partie élastique (172) de manière à supporter la broche de liaison (130);
dans lequel
l'organe support de broche (170) comprend :
une partie de corps (171) ;
une partie élastique (172) s'étendant à partir d'un côté de la partie de corps (171) de manière à présenter une certaine longueur et être espacée de la partie de corps (171) d'un certain intervalle avec elle ;
une partie de butée (173) formée sur un côté de la partie élastique (172); et
une partie support (174) s'étendant à partir de la partie de corps (171) sur une certaine longueur de manière à fixer la broche de liaison (130) lorsque celle-ci est couplée à la cage (110A);
dans lequel une extrémité de la partie support (174) possède une surface inclinée,
**caractérisé en ce que** la partie de butée (173) vient en butée sur un côté de la cage (110A) dans un évidement de butée (117).

2. Le dispositif de la revendication 1, dans lequel l'organe support de broche (170) est pourvu d'une surface plane formée sur une surface de la partie de corps (171) de manière à se trouver supportée par une surface intérieure de la cage (110A) lorsqu'elle est couplée à la cage (110A), et la partie élastique (172) est formée de manière à être inclinée par rapport à la surface plane de la partie de corps (171).

3. Le dispositif de la revendication 1, comprenant en outre:
une butée (176) faisant saillie à partir d'une partie d'extrémité de la partie élastique (172) sur une certaine longueur de manière à venir en appui contre, et venir ainsi en butée avec, la partie de corps (171) lorsque la partie élastique (172) est fléchie de plus d'une certaine distance.

4. Le dispositif de la revendication 1, comprenant en outre :
un évidement de butée (A) disposé dans une surface latérale de la partie d'extrémité de la partie élastique (172) pour faciliter le retrait de l'organe support de broche (170).
